# EUROPÄISCHE PATENTANMELDUNG

(11) **EP 2 594 531 A2**
(43) Veröffentlichungstag der Anmeldung: **22.05.2013**
(21) Anmeldenummer: 12192292.6
(22) Anmeldetag: 12.11.2012
(51) Int. Cl.: C02F 1/467, C02F 103/42, C02F 1/66

(54) **Zu elektroytischen Aufbereitung geeignetes Badewasser, Verfahren zu dessen Herstellung und seine Verwendung**

(30) Priorität: 15.11.2011 AT 16912011
(71) Anmelder: pro aqua Diamantelektroden Produktion GmbH & Co KG, 8712 Niklasdorf (AT)
(72) Erfinder: Schelch, Michael, 8600 Oberaich (AT); Staber, Wolfgang, 8600 Bruck an der Mur (AT); Hermann, Robert, 8600 Oberaich (AT); Wesner, Wolfgang, 1220 Wien (AT)
(74) Vertreter: Vinazzer, Edith

(57) **Zusammenfassung**

Die Erfindung betrifft ein zur Aufbereitung mittels Elektrolyse geeignetes Badewasser auf Basis von Leitungswasser.

Das Badewasser enthält zumindest eines der Alkalimetallionen Na⁺, K⁺ oder Li⁺ in einem Gehalt von 100 mg/l bis zur Sättigungsgrenze und sein Chlorid (Cl⁻)-Gehalt ist jener des zugrundeliegenden Leitungswassers. Der Gehalt an Alkalimetallionen Na, K und Li wird durch Zugabe einer oder mehrerer der Hydrogencarbonatverbindungen NaHCO3, KHCO3 oder LiHCO3 und / oder einer oder mehrerer Carbonatverbindungen Na2CO3, K2CO3 oder Li2CO3 erreicht.

## Beschreibung

Die Erfindung betrifft ein zur Aufbereitung mittels Elektrolyse geeignetes Badewasser auf Basis von Leitungswasser. Die Erfindung betrifft ferner ein Verfahren zur Herstellung eines Badewassers und seine Verwendung.

Es ist üblich, das Wasser in Bade- oder Schwimmbecken (Swimmingpools) zur Desinfektion zu chloren, da Chlor bereits in einer sehr geringen Konzentration von wenigen Zehntel Milligrammen pro Liter im Wasser vorhandene Keime abtötet. Bislang gibt es keine echte Alternative zur Desinfektion von Badewasser mit Chlor. Organische Belastungsstoffe im Wasser werden durch Chlor oxidiert und dadurch abgebaut, wobei pro Liter Badewasser in öffentlichen Bädern zwischen 0,3 mg und 0,6 mg freies Chlor pro Liter Wasser erlaubt sind. Lediglich aus seuchenhygienischen Gründen darf die Konzentration kurzfristig erhöht werden. In sauberem Wasser findet Chlor als Reaktionspartner nur die organischen Substanzen von Bakterien, die abgetötet werden. In Wasser mit organischer Verschmutzung bindet sich das Chlor auch an Schmutzstoffe und bildet mit diesen chlororganische Verbindungen. Die sogenannten Chlor-Amine entstehen durch Verbindung von Chlor mit Stickstoffverbindungen, die beispielsweise aus Urin oder von Schweiß stammen. Chlor-Stickstoff-Verbindungen werden unter dem Begriff "gebundenes Chlor" zusammengefasst. Der typische Geruch in Schwimmbädern und das Auftreten von Augenreizungen sind auf Chlor-Amine zurückzuführen. Ein niedriger Wert an gebundenem Chlor ist daher ein Maßstab für eine gute Wasserqualität.

Des Weiteren bilden sich im Wasser Chlor-Kohlenstoff-Verbindungen, insbesondere Trihalogenmethane (THM), welche leicht flüchtige organische Halogenverbindungen sind. Für Trihalogenmethane, deren bekanntester Vertreter das Chloroform (Tritlamethan) ist, besteht ein begründeter Verdacht auf kanzerogene Wirkung. Einen Richtwert für die THM-Belastung, unterhalb welcher nicht mit einer krebserzeugenden Wirkung zu rechnen ist, gibt es derzeit nicht, soll aber erarbeitet werden. Solange eine Schädigung der menschlichen Gesundheit nicht ausgeschlossen werden kann, müssen diese und auch andere verdächtige Stoffe im Badewasser vorsorglich als gesundheitsgefährdend betrachtet werden und ihre Konzentration entsprechend begrenzt werden.

Der Erfindung liegt die Aufgabe zugrunde, ein elektrolytisch aufbereitbares Badewasser zur Verfügung zu stellen, welches zur Desinfektion kein Chlor benötigt, keine pH-Regulierung erfordert und keine gesundheitsgefährdenden Verbindungen beinhaltet oder erzeugt.

Gelöst wird die gestellte Aufgabe erfindungsgemäß dadurch, dass das Badewasser zumindest eines der Alkalimetallionen Na⁺, K⁺ oder Li⁺ in einem Gehalt von 100 mg/l bis zur Sättigungsgrenze enthält und dessen Chlorid (Cl⁻)-Gehalt jener des zugrunde liegenden Leitungswassers ist.

Die im Wasser enthaltenen Alkalimetallionen sorgen für die zur Elektrolyse erforderliche elektrische Leitfähigkeit. Die Desinfektionsmittel zur Beseitigung der organischen Verunreinigungen werden direkt aus dem Wasser durch Elektrolyse erzeugt. Diese Ionen erhöhen die elektrische Leitfähigkeit des Wassers und puffern den pH-Wert auf einen Wert um 8 oder höher, demnach in einen optimalen Bereich, welcher die Haut nicht austrocknet, sondern den Basenhaushalt reguliert.

Das erfindungsgemäße Verfahren zur Herstellung eines mittels Elektrolyse aufbereitbaren und auf Leitungswasser basierenden Badewassers ist **dadurch gekennzeichnet, dass** zumindest eine der Hydrogencarbonatverbindungen NaHCo₃, KHCO₃ oder LiHCO₃ und/oder eine der Carbonatverbindungen Na₂Co₃, K₂CO₃ oder Li₂CO₃ in einer derartigen Menge zudosiert wird, dass die Leitfähigkeit des Wassers mindestens 0,5 mS/cm beträgt.

Das Badewasser gemäß der Erfindung wird einmalig beim bzw. unmittelbar nach dem Einlassen des Bade- oder Schwimmbeckens hergestellt und bleibt über einen sehr langen Zeitraum, insbesondere über die gesamte Badesaison fast ohne Wartungsaufwand in optimaler Qualität erhalten. Es wird dem Wasser kein Salz zugegeben, aus dem sich aktive Chlorsubstanzen (Cl₂, HClO, ClO⁻) entwickeln könnten. Mit einer oder mehreren der erwähnten Hydrogencarbonatverbindungen oder Carbonatverbindungen wird das Wasser auf einen Leitfähigkeitswert von mindestens 0,5 mS/cm eingestellt. Einmal eingestellt ändern sich Leitfähigkeit und Härte beispielsweise durch Nachfüllen oder bei Wasserverlust. Aufgrund der Zusammensetzung des Badewassers stellt sich ein pH-Wert in einer Größenordnung von 8, je nach der Menge der zudosierten Verbindungen insbesondere bis zu 11 ein, einem optimalen Bereich für die menschliche Haut. Es ist daher auch nicht erforderlich, pH-Regulatoren zuzusetzen, es ist nicht einmal erforderlich, den pH-Wert während der Badesaison bzw. dem Badebetrieb zu prüfen.

Für eine optimale Funktion der Elektrolyse des Wassers und für eine gute Hautverträglichkeit wird das Leitungswasser zuerst enthärtet, wobei eine Gesamthärte ≤ 7°dH, insbesondere ≤ 4°dH, vorzugsweise ≤ 3°dH, eingestellt wird.

Im erfindungsgemäßen Badewasser stammen die Alkalimetallionen von einer oder mehrerer der Verbindungen NaHCo₃, KHCO₃, LiHCO₃, Na₂Co₃, K₂CO₃ oder Li₂CO₃, die zudosiert werden.

Das erfindungsgemäße Badewasser weist eine Gesamthärte von höchstens 7°dH auf. Insbesondere beträgt seine Gesamthärte ≤ 4°dH, vorzugsweise ≤ 3°dH. Eine geringe Gesamthärte des Badewassers ist für eine einwandfreie und wartungsarme Funktion der zur Elektrolyse vorgesehenen Elektrolysezelle vorteilhaft.

Die elektrische Leitfähigkeit des erfindungsgemäßen Badewassers ist vor allem vom Gehalt an Alkalimetallionen Na⁺, K⁺ und Li⁺ abhängig und sollte mindestens 0,5 mS/cm, insbesondere bis zu 10 mS/cm, vorzugsweise bis zu 5 mS/cm, betragen.

Es ist möglich, die Hydrogencarbonatverbindungen und/oder die Carbonatverbindungen in einer Menge dem Badewasser zuzugeben bis die jeweilige Sättigungsgrenze erreicht ist. Eine Dosierung an der Sättigungsgrenze empfiehlt sich vor allem für spezielle Bäder in kleineren Badebecken, die nicht zum Schwimmen vorgesehen sind.

Die erwähnte Enthärtung des Wassers kann auf einfache Weise durch Umkehrosmose oder durch Ionentausch durchgeführt werden.

Die Erfindung betrifft ferner die Verwendung des Badewassers gemäß der Erfindung zur Erstbefüllung in einer Anlage mit einem Bade- oder Schwimmbecken und einem Aufbereitungskreislauf mit einer Filtereinrichtung, einer Umwälzeinrichtung und einer Elektrolysezelle, welche im Bypass oder im Hauptstrom eingebaut ist. Das Badewasser wird zur Erzeugung der Oxidations- bzw. Desinfektionsmittel im Betrieb der Anlage durch Elektrolyse in der Elektrolysezelle eingesetzt. Besonders gut geeignet sind Elektrolysezellen, welche wahlweise Platin-, Iridium-, Iridium/Ruthenium oder Diamantelektroden enthalten.

Weitere Merkmale, Vorteile und Einzelheiten der Erfindung ergeben sich aus der nachfolgenden Beschreibung.

Die Erfindung befasst sich mit der Wasseraufbereitung bzw. Desinfektion von Badewasser, insbesondere in Schwimmbecken (Swimmingpools), künstlich angelegten Badeteichen, Badebecken und dergleichen im privaten und im kommerziellen Bereich. Die Wasseraufbereitung gemäß der Erfindung basiert auf der Aktivierung von Sauerstoff im Badewasser durch Elektrolyse des Badewassers in einer Elektrolysezelle. An der Anode der Elektrolyseeinheit entstehen neben Elektrolysesauerstoff, Peroxide und Alkalipercarbonate, welche als Träger (Speicher) von Aktivsauerstoff fungieren. Derart ist es möglich, im ganzen Becken eine Depotwirkung für Aktivsauerstoff zu erzielen.

Das Badewasser selbst ist daher ein Elektrolyt, welcher auf Leitungswasser, insbesondere dem Wasser aus der kommunalen Wasserversorgung, basiert. Das Badewasser gemäß der Erfindung weist eine Härte ≤ 7°dH (Grad deutscher Härte), insbesondere ≤ 4°dH und vorzugsweise ≤ 3°dH, und einen Gehalt an zumindest einem der Alkalimetallionen Na⁺, K⁺ und Li⁺ zwischen 100 mg/l und der Sättigungsgrenze auf, vorzugsweise zwischen 500 mg/l und 5000 mg/l. Die Leitfähigkeit des Badewassers hat einen Wert zwischen 0,5 mS/cm und jenem Leitfähigkeitswert, der sich bei Erreichen der Sättigungsgrenze einstellt. Wasser in Schwimmbecken wird insbesondere auf eine Leitfähigkeit von bis zu 10 mS/cm, vorzugsweise von bis zu 5 mS/cm, eingestellt. Ein bevorzugter Wert für die Leitfähigkeit liegt bei 2,5 mS/cm. Der Gehalt an Cl⁻ Ionen im Badewasser ist sehr gering, ergibt sich lediglich aus dem natürlichen Gehalt an Cl⁻ Ionen im verwendeten Leitungswasser, welcher üblicherweise zwischen 1 mg/l und 40 mg/l beträgt. Das Badewasser besitzt ferner infolge der geringen Härte nur einen geringen Gehalt an Ca²⁺ und Mg²⁺ Ionen.

Der Gehalt an den Alkalimetallionen Na⁺, K⁺ und Li⁺ wird durch die Zugabe einer oder mehrerer der Hydrogencarbonatverbindungen NaHCo₃, KHCO₃ oder LiHCO₃ und/oder einer oder mehrerer der Carbonatverbindungen Na₂Co3, K₂CO₃ oder Li₂CO₃ erreicht. Bevorzugt ist die Zugabe von NaHCO₃ ggf. gemeinsam mit Na₂CO₃, wobei sich das Verhältnis dieser beiden Verbindungen danach richtet, welcher pH-Wert im Badewasser eingestellt werden soll. Eine reine Lösung von NaHCO₃ ergibt je nach der Menge NaHCO₃ in Wasser einen pH-Wert zwischen 7,6 und 8,2, eine reine Lösung von Na₂CO₃ einen pH-Wert von bis zu 11. Die Einstellung der Gesamthärte erfolgt vor der Zugabe dieser Verbindungen durch Abscheidung der Härtebildner, vorzugsweise in bekannter Weise durch Umkehrosmose oder Ionentausch. So kann beispielsweise bei der Becken- oder Poolbefüllung das Leitungswasser in einer Umkehrosmose-Anlage oder einer Ionentauscher-Anlage (Wasserentkalkungsanlage) enthärtet werden.

Nach der Befüllung des Badebeckens bzw. Schwimmbeckens mit enthärtetem Wasser wird bzw. werden eine oder mehrere der erwähnten Hydrogencarbonat- oder Carbonatverbindungen in einer solchen Menge zudosiert, bis die elektrische Leitfähigkeit des Wassers einen bestimmten, vorab gewählten Wert im Bereich von 0,5 mS/cm bis zum Wert bei Erreichen der Sättigungsgrenze einnimmt. Wie bereits erwähnt ist dieser Bereich bei Wasser in Schwimmbecken vorzugsweise zwischen 0,5 bis 10 mS/cm, beispielsweise 2,5 mS/cm.

Optional kann die elektrische Leitfähigkeit zum Teil durch Zudosierung von NaCl eingestellt werden. Dabei können zwischen 10 % und 40% der elektrischen Leitfähigkeit von zugegebenem NaCl stammen.

Zur Erzeugung der Desinfektionsmittel aus dem Elektrolyten, dem Badewasser, mittels Elektrolyse wird das Badewasser durch eine Elektrolysezelle geleitet. Die Elektrolysezelle kann in an sich bekannter Weise aufgebaut sein, ihre Elektroden bestehen insbesondere aus Iridium, Iridium/Ruthenium, Platin oder sind Diamantelektroden (wie z.B. Elektroden aus dotierten Diamantpartikeln). Die Elektrolysezelle kann eine oder mehrere bipolare Elektroden aus den erwähnten Materialien beinhalten. Die Elektrolysezelle wird insbesondere in den pumpenbetriebenen Kreislauf zur Wasseraufbereitung im Bypass bzw. auch im Hauptstrom eingebaut, an einer Stelle nach der mechanischen Filterung in einer Filtervorrichtung, beispielsweise einem Sandfilter. Bei einem Badebecken, welches etwa 100 m³ Wasser enthält, werden beispielsweise während des Betriebes der Wasseraufbereitung, bei laufender Pumpe, etwa 1200 Liter Wasser pro Stunde im Bypass durch die Elektrolysezelle geleitet.

Alternativ kann bei kleineren Badebecken, bei Whirlpools oder Hot-Tubs, die Elektrolysezelle als Tauchzelle, beispielsweise gemäß dem österreichischen Patent Nr. 509286 ausgeführt sein und direkt im Becken positioniert werden.

Durch die Elektrolyse des Badewassers entstehen in Abhängigkeit der Zusammensetzung des Badewassers als Desinfektionsmittel die Aktivsauerstoffverbindungen Natriumpercarbonat, Natriumhydrogenpercarbonat, Kaliumpercarbonat, Kaliumhydrogenpercarbonat, Lithiumpercarbonat, Lithiumhydrogencarbonat, und Wasserstoffperoxid, sodass das Badewasser optimal aufbereitet wird. Partikel, die in das Badewasser fallen, werden durch die Filtereinrichtung, mechanisch entfernt. Im Gegensatz zu biologischen Aufbereitungssystemen reicht es, wenn der Aufbereitungskreislauf ca. acht Stunden pro Tag in Betrieb ist. In Folge der Zusammensetzung des Badewassers stellt sich "automatisch" ein pH-Wert zwischen etwa 8 und etwa 11 ein, welcher erhalten bleibt. Es ist nicht mehr erforderlich, den pH-Wert des Badewassers während der Badesaison zu prüfen und es entfällt daher auch eine regulierende Zugabe von Chemikalien zur pH-Hebung oder pH-Senkung, wie es bei der Desinfektion mit Chlor erforderlich ist.

Ist es erforderlich, Frischwasser nachzufüllen oder sind größere Regenmengen in das Bade- oder Schwimmbecken gelangt, empfiehlt sich eine Überprüfung der Leitfähigkeit, um bei Bedarf eine Hydrogencarbonat- oder eine Carbonatverbindung zuzugeben, um die gewünschte Leitfähigkeit wiederherzustellen.

Ein Schwimm- bzw. Badewasser gemäß der Erfindung entfaltet auch keinen Chlorgeruch und es entfällt die Anreicherung von chlororganischen Verbindungen. Es ist kein Wasserwechsel erforderlich und Stahl-Korrosion ist durch den sehr geringen Chloridgehalt und dem Fehlen von Oxidationsmittel auf Chlorbasis sowie einem pH-Wert >8 nicht zu erwarten (vergleiche Pourbaix Diagramm für Eisen). Durch einen pH-Wert im Bereich von etwa 8 bis etwa 11 ist das Bade- bzw. Schwimmwasser zudem ausgesprochen hautfreundlich.

Das erfindungsgemäße Badewassers weist eine ausgezeichnete Verträglichkeit mit verschiedenen Badezusätzen aus. Zusätze, welche größtenteils in chloriertem Badewasser nicht einsetzbar sind, weil in der Folge gesundheitsschädliche und die Umwelt belastende chlorierte Verbindungen entstehen würden, können in dem erfindungsgemäßen Badewasser gefahrlos zum Einsatz gelangen. Dies erweitert die Applikationsmöglichkeiten der Erfindung wesentlich. Um über die reine Funktionalität hinausgehende Kundenbedürfnisse zu erfüllen, können dem Badewasser verschiedene Zusätze beigegeben werden. Diese Zusätze können die Steigerung der Hautfreundlichkeit oder des Wohlbefindens der Badegäste dienen, wie beispielsweise Öle, Proteine, organische Säuren, insbesondere Fettsäuren und deren Derivate, Zitronensäure, Sulfonsäuren, Alkohole, Mehrfachalkohole wie Glycerin, und deren Derivate, Emulsionen von Ölen, Pflanzen und Fruchtextrakten, ferner Magnesium-, Eisen-, Mangan, und Molybdensalze sowie Salze anderer Spurenelemente, aber auch bloß die Wahrnehmung des Badewassers in optischer (Farbe, Transparenz, optische Aufheller, Leuchteffekte) oder olfactorischer (Geruch und Geschmack) Hinsicht verändernde Zusätze. Darüber hinaus kann die Beschaffenheit (Konsistenz) des Wassers durch Additive modifiziert werden, beispielsweise durch Stärkederivate, Algenextrakte oder Emulsionen. Andere Zusätze zum erfindungsgemäßen Badewasser können spezielle Effekte bewirken. Diesbezügliche Beispiele sind Schaumbildner, Sprudel oder Substanzen welche die subjektive Wahrnehmung der Temperatur des Badewassers beeinflussen. All diese Zusätze brauchen unter den Bedingungen, wie sie durch die oxidative Aufbereitung herrschen, nicht langzeitbeständig sein. Die Zusätze erfüllen eine gewisse Zeit ihre Funktion und werden bei Bedarf ergänzt.

## Patentansprüche

1. Zur Aufbereitung mittels Elektrolyse geeignetes Badewasser auf Basis von Leitungswasser,
**dadurch gekennzeichnet,**
**dass** es zumindest eines der Alkalimetallionen Na⁺, K⁺ oder Li⁺ in einem Gehalt von 100 mg/l bis zur Sättigungsgrenze enthält und dessen Chlorid (Cl⁻)-Gehalt jener des zugrundeliegenden Leitungswassers ist.

2. Badewasser nach Anspruch 1, **dadurch gekennzeichnet, dass** die Alkalimetallionen von einer oder mehreren der Verbindungen NaHCO₃, KHCO₃, LiHCO₃, Na₂CO₃, K₂CO₃ oder Li₂CO₃ stammen, welche dem Badewasser zudosiert sind.

3. Badewasser nach Anspruch 1 oder 2, **dadurch gekennzeichnet, dass** es eine Gesamthärte ≤ 7°dH, insbesondere ≤ 4°dH, vorzugsweise ≤ 3°dH, aufweist.

4. Badewasser nach einem der Ansprüche 1 bis 3, **dadurch gekennzeichnet, dass** es eine elektrische Leitfähigkeit von 0,5 mS/cm bis 10 mS/cm, insbesondere bis zu 5 mS/cm, und vorzugsweise in der Größenordnung von 2,5 mS/cm aufweist.

5. Badewasser nach einem der Ansprüche 1 bis 4, **dadurch gekennzeichnet, dass** aus dem Badewasser Oxidations- bzw. Desinfektionsmittel durch Elektrolyse in einer Elektrolysezelle erzeugt werden.

6. Badewasser nach einem der Ansprüche 1 bis 5, **dadurch gekennzeichnet, dass** es zusätzlich eine oder mehrere der Substanzen Öle, Proteine, organische Säuren, insbesondere Fettsäuren und deren Derivate, Zitronensäure, Sulfonsäuren, Alkohole, Mehrfachalkohole wie Glycerin und deren Derivate, Emulsionen von Ölen, Pflanzen und Fruchtextrakten, ferner Magnesium-, Eisen-, Mangan, und Molybdensalze sowie Salze anderer Spurenelemente, oder die Wahrnehmung des Badewassers in optischer oder olfactorischer Hinsicht verändernde Additive oder Additive, welche die Beschaffenheit (Konsistenz) des Wassers modifizieren, beispielsweise Stärkederivate, Algenextrakte oder Emulsionen, ferner Schaumbildner, Sprudel oder Substanzen, welche die subjektive Wahrnehmung der Temperatur des Badewassers beeinflussen, enthält.

7. Verfahren zur Herstellung eines mittels Elektrolyse aufbereitbaren, auf Leitungswasser basierenden Badewassers,
**dadurch gekennzeichnet,**
**dass** zumindest eine der Hydrogencarbonatverbindungen NaHCO₃, KHCO₃ oder LiHCO₃ und/oder eine der Carbonatverbindungen Na₂CO₃, K₂CO₃, Li₂CO₃ in einer derartigen Menge zudosiert wird, dass die Leitfähigkeit des Wassers mindestens 0,5 mS/cm beträgt.

8. Verfahren nach Anspruch 7, **dadurch gekennzeichnet, dass** die Hydrogencarbonatverbindung(en) und/oder Carbonatverbindung(en) bis zur Sättigungsgrenze zudosiert wird bzw. werden.

9. Verfahren nach Anspruch 7, **dadurch gekennzeichnet, dass** vorab die Härtebildner im Leitungswasser, beispielsweise durch Umkehrosmose oder Ionentausch, bis zu einer Gesamthärte ≤ 7°dH abgeschieden werden, wobei die Gesamthärte des Leitungswassers insbesondere auf ≤ 4°dH, vorzugsweise ≤ 3°dH, eingestellt wird.

10. Verfahren nach einem der Ansprüche 7 bis 9, **dadurch gekennzeichnet, dass** die Leitfähigkeit des Wassers auf einem Wert zwischen 0,5 mS/cm und 10 mS/cm, insbesondere bis 5 mS/cm, vorzugsweise auf einen Wert in der Größenordnung von 2,5 mS/cm, eingestellt wird.

11. Verfahren nach einem der Ansprüche 7 bis 10, **dadurch gekennzeichnet, dass** zwischen 10 % und 40% der elektrischen Leitfähigkeit durch Zudosierung von NaCl eingestellt wird.

12. Verfahren nach einem der Ansprüche 7 bis 11, **dadurch gekennzeichnet, dass** dem Badewasser zusätzlich eine oder mehrere der Substanzen Öle, Proteine, organische Säuren, insbesondere Fettsäuren und deren Derivate, Sulfonsäuren, Alkohole, Mehrfachalkohole wie Glycerin und deren Derivate, Emulsionen von Ölen, Pflanzen und Fruchtextrakten, ferner Magnesium-, Eisen-, Mangan, und Molybdensalze sowie Salze anderer Spurenelemente, oder die Wahrnehmung des Badewassers in optischer oder olfactorischer Hinsicht verändernde Additive oder Additive, welche die Beschaffenheit (Konsistenz) des Wassers modifizieren, beispielsweise Stärkederivate, Algenextrakte oder Emulsionen, ferner Schaumbildner, Sprudel oder Substanzen, welche die subjektive Wahrnehmung der Temperatur des Badewassers beeinflussen, zugegeben werden.

13. Verwendung des Badewassers gemäß einem oder mehreren der Ansprüche 1 bis 11 zur Erstbefüllung in einer Anlage mit einem Bade- oder Schwimmbecken und einem Aufbereitungskreislauf mit einer Filtereinrichtung, einer Umwälzeinrichtung und einer Elektrolysezelle, welche im Bypass oder im Hauptstrom eingebaut ist.

14. Verwendung des Badewassers nach Anspruch 13 zur Erzeugung der Oxidations- bzw. Desinfektionsmittel im Betrieb der Anlage durch Elektrolyse in der Elektrolysezelle.

15. Verwendung des Badewassers nach Anspruch 13 oder 14 in einer Anlage, deren Elektrolysezelle Platin-, Iridium-, Iridium/Ruthenium oder Diamantelektroden enthält.
